(19) 

**Europäisches Patentamt**
**European Patent Office**
**Office européen des brevets**

(11) **EP 4 787 009 A1**

(12) # EUROPEAN PATENT APPLICATION
published in accordance with Art. 153(4) EPC

(43) Date of publication:
**05.08.2026 Bulletin 2026/32**

(21) Application number: **24878874.7**

(22) Date of filing: **09.10.2024**

(51) International Patent Classification (IPC):
***G01S 5/02*** (2010.01)      ***H04W 64/00*** (2009.01)

(52) Cooperative Patent Classification (CPC):
**G01S 5/02; G01S 17/06; H04W 64/00**

(86) International application number:
**PCT/CN2024/123651**

(87) International publication number:
**WO 2025/082230 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.10.2023   CN 202311351203**

(71) Applicant: **HUAWEI TECHNOLOGIES CO., LTD.
Shenzhen 518129 (CN)**

(72) Inventors:
• **GAO, Xin
 Shenzhen, Guangdong 518129 (CN)**
• **LIU, Mengting
 Shenzhen, Guangdong 518129 (CN)**

(74) Representative: **Thun, Clemens
 Mitscherlich PartmbB
 Karlstraße 7
 80333 München (DE)**

(54) **POSITIONING METHOD AND POSITIONING APPARATUS**

(57)     This application relates to the communication field and discloses a positioning method and a positioning apparatus, to improve positioning accuracy of a terminal device through low earth orbit satellite-based positioning. The method includes: obtaining positioning auxiliary information, where the positioning auxiliary information includes an elevation angle and/or a Doppler shift of a ground reference station relative to a low earth orbit satellite, and the ground reference station is a ground reference station whose distance from a terminal device is less than a threshold; determining a target Doppler shift of the terminal device relative to the low earth orbit satellite based on the positioning auxiliary information; and performing positioning based on the target Doppler shift.

FIG. 12

**Description**

This application claims priority to Chinese Patent Application No. 202311351203.0, filed with the China National Intellectual Property Administration on October 17, 2023 and entitled "POSITIONING METHOD AND POSITIONING APPARATUS", which is incorporated herein by reference in its entirety.

**TECHNICAL FIELD**

This application relates to the communication field, and in particular, to a positioning method and a positioning apparatus.

**BACKGROUND**

With the development of satellite positioning system technologies, electronic devices can perform positioning by using a global navigation satellite system (global navigation satellite system, GNSS). The GNSS includes a global positioning system (global positioning system, GPS), a BeiDou satellite positioning system, and the like.

Generally, a satellite positioning system includes satellites like a high earth orbit satellite, whose moving speed is slow relative to the ground and corresponding Doppler shift is smaller. However, because the high earth orbit satellite is excessively far away from the ground, strength of a signal reaching the ground is vulnerable to interference, resulting in poor positioning accuracy of a terminal device.

**SUMMARY**

Embodiments of this application provide a positioning method and a positioning apparatus, to improve positioning accuracy of a terminal device through low earth orbit satellite-based positioning.

According to a first aspect, a positioning method is provided. The method includes: After obtaining positioning auxiliary information including an elevation angle and/or a Doppler shift of a ground reference station relative to a low earth orbit satellite, a terminal device may determine a target Doppler shift of the terminal device relative to the low earth orbit satellite based on the positioning auxiliary information, and then the terminal device may perform positioning based on the target Doppler shift.

Based on the foregoing descriptions, according to the positioning method provided in this application, because a distance between the ground reference station and the terminal device is less than a threshold, it indicates that the elevation angle and/or the Doppler shift of the ground reference station differ/differs insignificantly from an elevation angle and/or a Doppler shift of the terminal device relative to the low earth orbit satellite. Therefore, the terminal device replaces the elevation angle and/or the Doppler shift of the terminal device relative to the low earth orbit satellite with the elevation angle and/or the Doppler shift of the ground reference station, to facilitate subsequent positioning estimation. Then, the terminal device determines the target Doppler shift of the terminal device relative to the low earth orbit satellite based on the obtained elevation angle and/or Doppler shift of the ground reference station relative to the low earth orbit satellite, and performs positioning based on the target Doppler shift, to avoid impact of the Doppler shift on positioning of the terminal device, and improve positioning accuracy of the terminal device.

With reference to the first aspect, in a possible implementation, the terminal device may obtain the positioning auxiliary information from a first network element. For example, the terminal device may send, to the first network element, request information used to request the positioning auxiliary information. In this way, after receiving a response message for the request information from the first network element, the terminal device may obtain the positioning auxiliary information from the response message.

The first network element includes any one of a positioning server, the ground reference station, and a serving base station of the terminal device. The positioning auxiliary information may further include timestamp information carrying a moment at which an elevation angle is calculated.

In a possible design, the terminal device may obtain the elevation angle and/or the Doppler shift of the ground reference station relative to the low earth orbit satellite by sending first request information to any one of the positioning server, the ground reference station, and the serving base station of the terminal device.

With reference to the first aspect, in a possible implementation, the terminal device may receive the timestamp information, to subsequently perform frequency shift compensation on a positioning reference signal at a corresponding moment based on the target Doppler shift at the moment.

With reference to the first aspect, in a possible implementation, when there is one ground reference station and the positioning auxiliary information is the Doppler shift, the terminal device may use the Doppler shift as the target Doppler shift.

With reference to the first aspect, in a possible implementation, the terminal device may receive ephemeris information sent by the low earth orbit satellite or receive ephemeris information sent by the ground reference station, and determine the target Doppler shift based on the ephemeris information of the low earth orbit satellite and the elevation angle.

The ephemeris information of the low earth orbit satellite includes a speed of the low earth orbit satellite and a height of the low earth orbit satellite relative to the ground.

Further, the terminal device may further determine the target Doppler shift based on the speed, the height, and the elevation angle.

Based on the foregoing descriptions, when obtaining the elevation angle of the ground reference station relative to the low earth orbit satellite, the terminal device may accurately determine the target Doppler shift based on the speed, the height, and the elevation angle. This facilitates subsequent frequency shift compensation on the positioning reference signal.

With reference to the first aspect, in a possible implementation, the target Doppler shift satisfies the following formula:

$$f_{d,shift} = \frac{v}{c} * \frac{R_e}{R_e + h} \cos(E) * f_c$$

$f_{d,shift}$ is the target Doppler shift, $v$ is the speed of the low earth orbit satellite, $c$ is the speed of light, $R_e$ is the radius of the earth, $h$ is the height of the low earth orbit satellite relative to the ground, $E$ is the elevation angle, and $f_c$ is a carrier center frequency.

With reference to the first aspect, in a possible implementation, when there are a plurality of ground reference stations and the positioning auxiliary information is the elevation angle of the ground reference station relative to the low earth orbit satellite, the terminal device may determine, for each ground reference station, a Doppler shift of the terminal device relative to the low earth orbit satellite based on the elevation angle of the ground reference station and the ephemeris information, and obtain a plurality of Doppler shifts, and then the terminal device determines the target Doppler shift based on the plurality of Doppler shifts.

Based on the foregoing descriptions, when there are the plurality of ground reference stations, the terminal device determines the plurality of Doppler shifts relative to the low earth orbit satellite, so that accuracy of the target Doppler shift of the terminal device relative to the low earth orbit satellite is improved, and correspondingly, during subsequent positioning, a positioning estimation error is reduced, to improve positioning accuracy.

With reference to the first aspect, in a possible implementation, when there are a plurality of ground reference stations, and the positioning auxiliary information is the Doppler shift of the ground reference station relative to the low earth orbit satellite, the terminal device may determine the target Doppler shift based on a plurality of Doppler shifts.

In a possible design, the terminal device may use an average value of the plurality of Doppler shifts as the target Doppler shift.

According to a second aspect, a positioning method is provided. The method includes: After receiving first request information that is sent by a terminal device and that is used to request an elevation angle and/or a Doppler shift of a ground reference station relative to a low earth orbit satellite, a first network element may obtain the elevation angle and/or the Doppler shift of the ground reference station relative to the low earth orbit satellite from the ground reference station, and send the elevation angle and/or the Doppler shift of the ground reference station relative to the low earth orbit satellite to the terminal device.

The first network element includes any one of a positioning server, the ground reference station, and a serving base station of the terminal device.

With reference to the second aspect, in a possible implementation, when the first network element is the positioning server, the positioning server may send, to the ground reference station, second request information used to request positioning auxiliary information, and receive the positioning auxiliary information sent by the ground reference station.

In a possible design, the positioning server may be disposed in a ground base station or a satellite, and the positioning server may also be disposed in the terminal device.

With reference to the second aspect, in a possible implementation, when the first network element is the serving base station of the terminal device, the serving base station of the terminal device may send, to the ground reference station, second request information used to request positioning auxiliary information, and receive the positioning auxiliary information sent by the ground reference station.

With reference to the second aspect, in a possible implementation, when the first network element is the ground reference station, the ground reference station may obtain ephemeris information of the low earth orbit satellite, and determine positioning auxiliary information based on the ephemeris information.

Based on the foregoing descriptions, the ground reference station receives the first request information sent by the terminal device, may directly determine the positioning auxiliary information based on the ephemeris information through calculation, and directly send the positioning auxiliary information to the terminal device, to reduce latency.

According to a third aspect, a positioning apparatus is provided, used in a terminal device. The terminal device includes an obtaining unit and a processing unit. The obtaining unit is configured to obtain an elevation angle and/or a Doppler shift of a ground reference station relative to a low earth orbit satellite.

The ground reference station is a ground reference station whose distance from the terminal device is less than a threshold.

The processing unit is configured to determine a target Doppler shift of the terminal device relative to the low earth orbit satellite based on the elevation angle and/or the Doppler shift of the ground reference station relative to the low earth orbit satellite.

The processing unit is further configured to perform positioning based on the target Doppler shift.

With reference to the third aspect, in a possible implementation, the apparatus further includes a transceiver unit configured to send first request information to a first network element. The first request information is used to request positioning auxiliary information.

The transceiver unit is further configured to receive a response message for the first request information, and the processing unit may obtain the positioning auxiliary information from the response message.

The positioning auxiliary information further includes ephemeris information of the low earth orbit satellite.

With reference to the third aspect, in a possible implementation, the processing unit is specifically configured to determine the target Doppler shift based on the ephemeris information and the elevation angle.

With reference to the third aspect, in a possible implementation, when there are a plurality of ground reference stations, the processing unit is specifically configured to determine, for each ground reference station, a Doppler shift of the terminal device relative to the low earth orbit satellite based on the elevation angle of the ground reference station and the ephemeris information, to obtain a plurality of Doppler shifts, and then the processing unit may further determine the target Doppler shift based on the plurality of Doppler shifts.

With reference to the third aspect, in a possible implementation, the processing unit is specifically configured to use the Doppler shift as the target Doppler shift.

According to a fourth aspect, a positioning apparatus is provided, used in a first network element. The first network element includes a transceiver unit and an obtaining unit.

The transceiver unit is configured to receive first request information that is sent by a terminal device and that is used to request an elevation angle and/or a Doppler shift of a ground reference station relative to a low earth orbit satellite.

The obtaining unit is configured to obtain the elevation angle and/or the Doppler shift of the ground reference station relative to the low earth orbit satellite.

The transceiver unit is further configured to send the elevation angle and/or the Doppler shift of the ground reference station relative to the low earth orbit satellite to the terminal device.

The ground reference station is a ground reference station whose distance from the terminal device is less than a threshold.

According to a fifth aspect, a communication apparatus is provided to implement the foregoing methods. The communication apparatus may be the terminal in the first aspect, the third aspect, or the fourth aspect, or an apparatus including the terminal, or an apparatus included in the terminal, for example, a chip; or the communication apparatus may be the network device in the second aspect or the fifth aspect, or an apparatus including the network device, or an apparatus included in the network device, for example, a chip. The communication apparatus includes a corresponding module, unit, or means (means) for implementing the foregoing method. The module, unit, or means may be implemented by hardware, software, or implemented by hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

The communication apparatus provided in the fifth aspect is configured to perform any one of the foregoing aspects or the possible implementations of the foregoing aspects. For specific details, refer to any one of the foregoing aspects or the possible implementations of the foregoing aspects. Details are not described herein again.

According to a sixth aspect, a communication apparatus is provided. The communication apparatus includes a processor and a communication interface. The communication interface is configured to communicate with a module outside the communication apparatus. The processor is configured to execute computer-executable instructions, so that the communication apparatus performs any method provided in the first aspect, or the communication apparatus performs any method provided in the second aspect.

According to a seventh aspect, a chip is provided. The chip includes a processor and an interface circuit. The interface circuit is configured to receive code instructions and transmit the code instructions to the processor. The processor is configured to run the code instructions to perform any method provided in the first aspect, or perform any method provided in the second aspect.

According to an eighth aspect, a computer-readable storage medium is provided. The computer-readable storage medium stores instructions. When the instructions are run on a communication apparatus, the communication apparatus is caused to perform the method in any one of the foregoing aspects.

According to a ninth aspect, a computer program product including instructions is provided. When the computer program product is run on a communication apparatus, the communication apparatus is caused to perform the method in any one of the foregoing aspects.

According to a tenth aspect, a communication apparatus (for example, the communication apparatus may be a chip or a chip system) is provided, where the communication apparatus includes a processor, configured to implement a function involved in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the fifth aspect to the tenth aspect is a chip, the foregoing sending action/function may be understood as outputting information, and the foregoing receiving action/function may be understood as inputting information.

For technical effects achieved by any design in the fifth aspect to the tenth aspect, refer to technical effects achieved by different designs in the first aspect, the second aspect, the third aspect, or the fourth aspect. Details are not described herein again.

According to an eleventh aspect, a communication system is provided. The communication system includes the first network element, the terminal, and the low earth orbit satellite in the foregoing aspects.

## BRIEF DESCRIPTION OF DRAWINGS

FIG. 1 is a simplified diagram of a communication system according to an embodiment of this application;
FIG. 2 is a diagram of composition of a communication apparatus according to an embodiment of this application;
FIG. 3 is a simplified diagram of another communication system according to an embodiment of this application;
FIG. 4 is a simplified diagram of another communication system according to an embodiment of this application;
FIG. 5a is a simplified diagram of another communication system according to an embodiment of this application;
FIG. 5b is a simplified diagram of another communication system according to an embodiment of this application;
FIG. 6a is a simplified diagram of another communication system according to an embodiment of this application;
FIG. 6b is a simplified diagram of another communication system according to an embodiment of this application;
FIG. 7 is a flowchart of a positioning method according to an embodiment of this application;
FIG. 8 is a diagram of a trilateral positioning principle according to an embodiment of this application;
FIG. 9 is a diagram of relative positions of a terminal device and a low earth orbit satellite according to an embodiment of this application;
FIG. 10 is a diagram of a relationship between a Doppler shift and an elevation angle according to an embodiment of this application;
FIG. 11 is a diagram of a relationship between a Doppler shift and a positioning error of a terminal device according to an embodiment of this application;
FIG. 12 is a flowchart of another positioning method according to an embodiment of this application;
FIG. 13 is a flowchart of another positioning method according to an embodiment of this application;
FIG. 14 is a flowchart of another positioning method according to an embodiment of this application;
FIG. 15 is a diagram of a structure of a positioning apparatus according to an embodiment of this application; and
FIG. 16 is a diagram of a structure of another positioning apparatus according to an embodiment of this application.

## DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this application, the terms such as "example" or "for example" represents giving an example, an illustration, or a description. Any embodiment or design solution described as an "example" or "for example" in this application should not be explained as being more preferred or having more advantages than another embodiment or design solution. In particular, the terms such as "example" and "for example" used herein are intended to present the related concept in a specific implementation.

To better understand the solutions provided in this application, some terms in this application are first described.

NTN (non-terrestrial network, non-terrestrial network): is a wireless communication network formed by air base stations.

Geostationary earth orbit (Geostationary Earth orbit, GEO): also referred to as a geostationary earth satellite. The geostationary earth orbit is a circular orbit at an altitude of 35786 km above the Earth's equator, and follows the direction of the Earth's rotation. An orbital period of an object in this orbit is equal to the rotation period of the Earth. Therefore, the object at a fixed location in the sky is stationary to a ground observer.

Low earth orbit (Low Earth Orbit, LEO) satellite: is a satellite that runs around the Earth at an altitude of 300 km to 1500 km.

A medium earth orbit (Medium Earth Orbit, MEO) satellite: is a satellite that runs in space around the Earth above the low earth orbit and below the geostationary earth orbit.

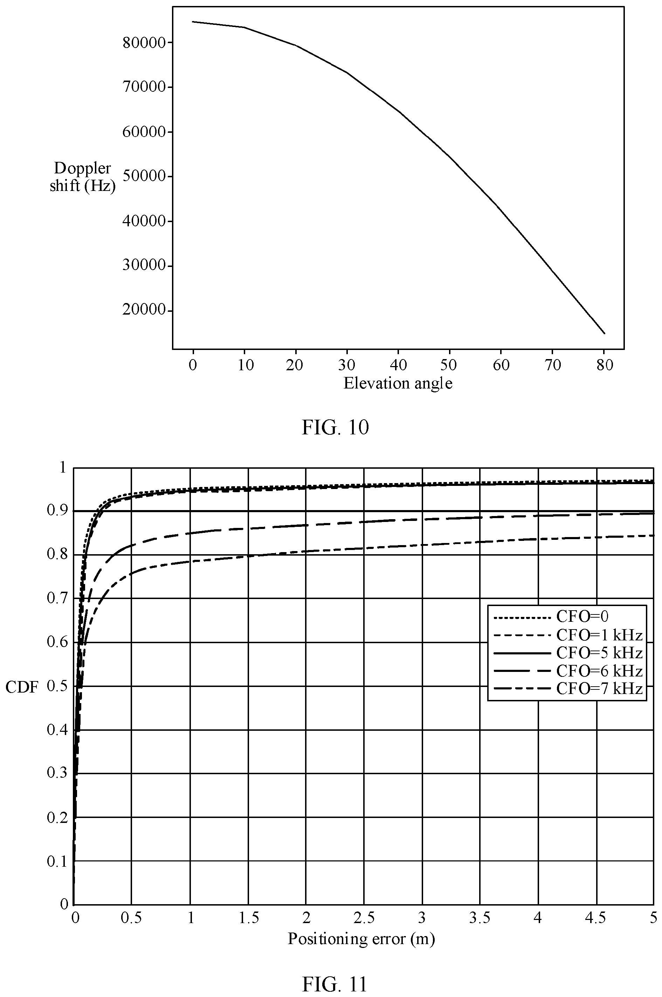

Doppler shift: in a mobile communication system, when a mobile station (for example, a mobile terminal on a high-speed railway or a vehicle) communicates with a base station during movement, there is a Doppler shift of a signal received by the base station, to be specific, a phase and a frequency of the signal received by the base station change due to movement of the mobile station. A magnitude of the Doppler shift is related to an elevation angle of a terminal device relative to the low earth orbit satellite. For details, refer to FIG. 10 below, where a horizontal coordinate represents the elevation angle, and a vertical coordinate represents the Doppler shift. It may be found that the Doppler shift decreases with an increase of the elevation angle by a magnitude of dozens of kHz. For example, an altitude of a satellite is 508 km, the earth radius is 6378 km, and a carrier frequency is 3.6 GHz.

With an increasing quantity of low earth orbit satellites launched in satellite orbit, construction of new satellite internet, which is led by various companies, is developing rapidly in the satellite communication industry. Currently, to support functions such as satellite communication and satellite navigation/positioning, a terminal device needs to establish communication connections to the medium earth orbit satellite, the high earth orbit satellite, and the low earth orbit satellite. This brings a great challenge to complexity and power consumption of the terminal device. In addition, for the satellite communication and positioning, there are different requirements in terms of signal, timing, satellite quantity and distribution, and the like. Therefore, satellite communication and satellite navigation systems are developed and evolved independently. The satellite navigation and positioning have high requirements on timing and geometric distribution of satellites, and generally depend on the medium earth orbit satellite and the high earth orbit satellite, but satellite positioning technologies currently in use are mostly based on a time difference of arrival, an angle of arrival, or the like.

Generally, in a positioning standard of a 5th generation mobile communication technology (5th generation mobile communication technology, 5G) terrestrial cellular network, a plurality of positioning technologies such as a downlink time difference of arrival (dl-time difference of arrival, DL-TDOA), a downlink angle of departure (downlink angle of departure, DAOD), an uplink time difference of arrival (ul-time difference of arrival, UL-TDOA), an uplink angle of arrival (ul-angle of arrival, UL-AOA), and round trip time (round trip time, RTT) are supported.

The DL-TDOA, UL-TDOA, and RTT algorithms are time-of-arrival-based positioning technologies. To be specific, a receive end needs to measure time of arrival of a signal sent by a transmit end, and then convert the time of arrival into information about a distance between the receive end and the transmit end, to finally obtain a location of a target to be positioned.

The DL-AOD and UL-AOA are angle-based positioning technologies. A receive end measures an angle of arrival of a reference signal sent by a transmit end, and infers a location of the receive end based on information about angles between the receive end and a plurality of transmit ends whose locations are known.

In the foregoing descriptions, it may be determined that a condition for implementing positioning of a terminal device is to receive a positioning reference signal sent by a satellite, and then measure the positioning reference signal to obtain time information or angle information, so as to calculate a distance and a location.

With the development of satellite positioning technologies, positioning of the terminal device may alternatively be performed by using a global navigation satellite system (global navigation satellite system, GNSS). The GNSS includes a global positioning system (global positioning system, GPS), a BeiDou satellite system, and the like. Satellites may be communication satellites, that is, may perform data communication with a ground terminal device (in other words, these satellites may support a broadband internet function), and reference signals of the satellites are based on a positioning reference signal of an existing terrestrial 5G communication network or a reference signal of a future 6G communication network.

Generally, the global positioning system includes the geostationary earth orbit satellite, or the medium/high earth orbit satellite. A larger ground area covered by the high earth orbit satellite indicates a smaller corresponding Doppler shift. However, because the high earth orbit satellite is excessively far away from the ground, strength of signals reaching the ground is vulnerable to interference, resulting in poor positioning accuracy of the terminal device. While in a case in which a speed of the geostationary satellite or the low earth orbit satellite relative to the ground terminal is 0, a Doppler shift is also 0. This facilitates positioning of the terminal device. Based on this, how to improve positioning accuracy of the terminal device through low earth orbit satellite-based positioning is a problem to be urgently resolved currently.

For the foregoing problem, according to the positioning method provided in this application, because a distance between a ground reference station and the terminal device is less than a threshold, it indicates that an elevation angle and/or a Doppler shift of the ground reference station differ/differs insignificantly from an elevation angle and/or a Doppler shift of the terminal device relative to the low earth orbit satellite. Therefore, the terminal device replaces the elevation angle and/or the Doppler shift of the terminal device relative to the low earth orbit satellite with the elevation angle and/or the Doppler shift of the ground reference station, to facilitate subsequent positioning estimation. Then, the terminal device determines a target Doppler shift of the terminal device relative to the low earth orbit satellite based on the obtained elevation angle and/or Doppler shift of the ground reference station relative to the low earth orbit satellite, and performs positioning based on the target Doppler shift, to avoid impact of the Doppler shift on positioning of the terminal device, and improve positioning accuracy of the terminal device.

For ease of understanding of embodiments of this application, the following descriptions are provided before embodiments of this application are described.

1. In embodiments of this application, a 3rd generation partnership project (3rd generation partnership project, 3GPP) network may include an operator network. The 3GPP network may include one or more operator networks.

2. In embodiments of this application, a "network element" and a "node" may be logical entities or physical entities. In other words, in embodiments of this application, an "apparatus" and the "network element" may be replaced for description. This is uniformly described herein, and details are not described below again.

3. In embodiments of this application, for ease of description, when numbering or indexing is involved, numbering may be performed consecutively starting from 1, may be performed consecutively starting from 0, or may be performed starting from any parameter.

4. "Predefinition", "preconfiguration", or "agreement in a protocol" may be implemented by pre-storing corresponding code or a corresponding table in a device (for example, a network device or a terminal device), or in another manner that may indicate related information. A specific implementation of "predefinition", "preconfiguration", or "agreement in a protocol" is not limited in embodiments of this application. "Storage" may be storage in one or more memories.

5. A "protocol" in embodiments of this application may be a standard protocol in the communication field, for example, may include a long term evolution (long term evolution, LTE) protocol, a new radio (new radio, NR) protocol, and a related protocol applied to a future communication system (for example, a 6G communication system). This is not limited in embodiments of this application.

6. In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

7. In embodiments of this application, "sending information to... (the terminal device)" may be understood as that a destination end of the information is the terminal device, and may include directly or indirectly sending the information to the terminal device; and "receiving information from... (the network device)" or "receiving information that is from... (the network device)" may be understood as that a source end of the information is the network device, and may include directly or indirectly receiving the information from the network device. Information may undergo necessary processing, for example, a format change, between the source end and the destination end for information sending. However, the destination end may understand valid information from the source end. A similar expression in this application may be understood similarly, and details are not described herein.

8. In descriptions of embodiments of this application, unless otherwise specified, "and/or" in embodiments of this application represents that three relationships may exist. For example, "A and/or B" may represent the following three cases: Only A exists, both A and B exist, and only B exists, where A and B may be singular or plural. In addition, "at least one of the following items (pieces)" or a similar expression thereof indicates any combination of these items, including a single item (piece) or any combination of a plurality of items (pieces). In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description.

Embodiments of this application may be applied to an LTE system or an NR system (which may also be referred to as a 5th generation (5th generation, 5G) system), an LTE-NR hybrid networking system, a vehicle to everything (vehicle-to-everything, V2X) system, a device-to-device (device-to-device, D2D) system, a machine-to-machine (machine-to-machine, M2M) communication system, an internet of things (internet of things, IoT) system (for example, a narrow band internet of things (narrow band internet of things, NB-IoT) system), a system evolved after 5G such as a 6G system, another next generation communication system, and the like. Alternatively, the communication system may be an open radio access network (open radio access network, O-RAN or ORAN), a cloud radio access network (cloud RAN, CRAN), or a wireless fidelity (wireless fidelity, Wi-Fi) system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the communication architecture and the emergence of new service scenarios, the technical solutions provided in embodiments of this application are also applicable to similar technical problems.

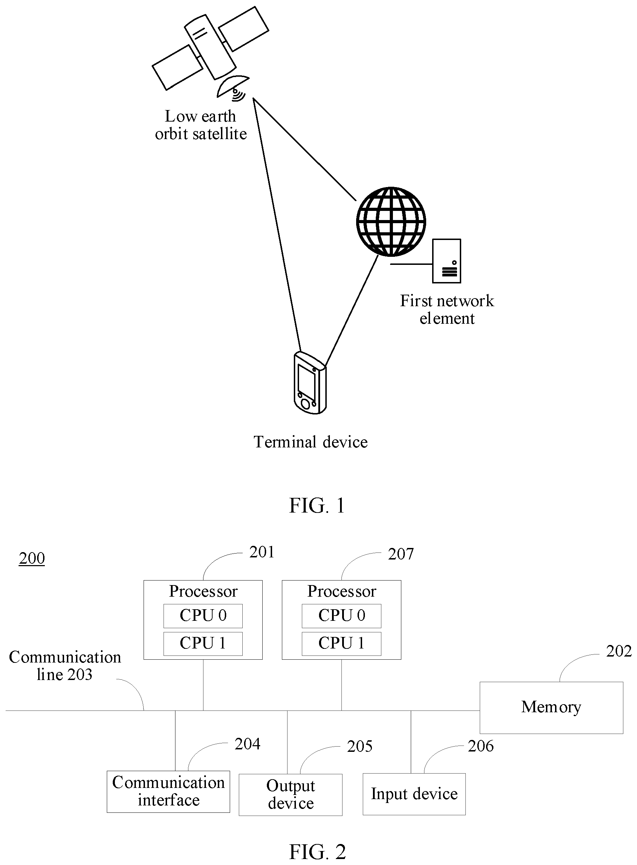

FIG. 1 is a simplified diagram of a communication system according to an embodiment of this application. As shown in FIG. 1, the communication system may include a low earth orbit satellite, a first network element, and a terminal device. The low earth orbit satellite, the first network element, and the terminal device are communicatively connected.

The first network element in FIG. 1 is an apparatus deployed in a radio access network to provide a wireless communication function for the terminal device. In other words, the first network element may be configured to communicate with the terminal device, for example, may include an evolved NodeB (NodeB or eNB or e-NodeB, evolved NodeB) in an LTE system or an LTE-advanced (LTE-advanced, LTE-A) system, for example, a conventional macro base station eNB and a micro base station eNB in a heterogeneous network scenario. Alternatively, the first network element may include a next generation NodeB (next generation NodeB, gNB) in the NR system. Alternatively, the first network element may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the first network element may include a base station in a non-terrestrial network (non-terrestrial network, NTN), that is, may be deployed on an airplane platform or a satellite. In the NTN, the first network element may be used as a layer 1 (L1) relay (relay), may be used as a base station, or may be used as an integrated access and backhaul (integrated access and backhaul, IAB) node. Alternatively, the network device may be a device that is in IoT and that implements functions of a base station, for example, a device that is in uncrewed aerial vehicle communication, V2X, D2D, or machine-to-machine (machine-to-machine, M2M) and that implements the functions of the base station.

In some possible scenarios, the first network element may alternatively be a module or unit that can implement some functions of a base station. For example, the first network element may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the first network element may be a first network element or a module of the first network element in an open radio access network (open RAN, ORAN) system. In the ORAN system, the CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (also referred to as a small cell), a relay station, an access point, a home base station, a TRP, a transmission point (transmission point, TP), or a mobile switching center. This is not specifically limited in embodiments of this application.

A form of the network device is not limited in embodiments of this application. An apparatus for implementing a function of the network device may be a network device, or may be an apparatus, for example, a chip system, that can support the network device in implementing the function. The apparatus may be mounted in the network device or used in cooperation with the network device.

The terminal device in embodiments of this application may be user equipment (user equipment, UE), an access terminal, a terminal unit, a user station, a terminal station, a mobile station, a remote station, a remote terminal, a user terminal (terminal equipment, TE), a mobile device, a wireless communication device, a terminal agent, a tablet computer (pad), a handheld device having a wireless communication function, a compute device, another processing device connected to a wireless modem, a vehicle-mounted device, a vehicle-mounted transceiver unit, a wearable device, or a terminal apparatus in a 5th generation (5th generation, 5G) mobile communication technology network or a public land mobile network (public land mobile network, PLMN) evolved after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device connected to a wireless modem, a vehicle-mounted device, an uncrewed aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal having a communication function in the internet of things (internet of things, IoT), for example, a terminal in V2X (for example, a vehicle to everything device), a terminal in D2D communication, or a terminal in M2M communication. The terminal device may be mobile or fixed.

The terminal device may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a tag, or the like.

A form of the terminal device is not limited in embodiments of this application. An apparatus for implementing a function of the terminal device may be a terminal device, or may be an apparatus, for example, a chip system, that supports the terminal device in implementing the function. The apparatus may be mounted in the terminal device or used in cooperation with the terminal device. In embodiments of this application, the chip system may include a chip, or may include a chip and another discrete component.

It should be noted that FIG. 1 is an example of an accompanying drawing, and a quantity of devices shown in FIG. 1 and naming of interfaces between the devices in FIG. 1 are not limited. In addition to the network element shown in FIG. 1, the communication system shown in FIG. 1 may further include another device, for example, a core network device. This is not limited.

During specific implementation, each device in FIG. 1 may be in a composition structure shown in FIG. 2 or include components shown in FIG. 2. FIG. 2 is a composition diagram of a communication apparatus 200 according to an embodiment of this application. The communication apparatus 200 may be a primary device or a chip or a system-on-a-chip in the primary device. Alternatively, the communication apparatus 200 may be a secondary device or a chip or a system-on-a-chip in the secondary device. As shown in FIG. 2, the communication apparatus 200 includes a processor 201, a communication interface 204, and a communication line 203.

Further, the communication apparatus 200 may further include a memory 202. The processor 201, the memory 202, and the communication interface 204 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The communication interface 204 is configured to communicate with another device or another communication network. The another communication network may be Ethernet, a radio access network (radio access network, RAN), a wireless local area network (wireless local area network, WLAN), or the like. The communication interface 204 may be a module, a circuit, a communication interface, or any apparatus that can implement communication.

The communication line 203 is configured to transfer information between components included in the communication apparatus 200.

The memory 202 is configured to store instructions. The instructions may be a computer program.

The memory 202 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or the like. This is not limited.

It should be noted that the memory 202 may exist independently of the processor 201, or may be integrated with the processor 201. The memory 202 may be configured to store instructions, program code, some data, or the like. The memory 202 may be located inside the communication apparatus 200, or may be located outside the communication apparatus 200. This is not limited. The processor 201 is configured to execute the instructions stored in the memory 202, to implement a data transmission method applied to short-distance wireless communication provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device like a keyboard, a mouse, a microphone, or a joystick, and the output device 205 is a device like a display or a speaker (speaker).

It should be noted that the communication apparatus 200 may be a desktop computer, a portable computer, a network server, a mobile phone, a tablet computer, a wireless terminal, an embedded device, a chip system, or a device having a structure similar to that in FIG. 2. In addition, the composition structure shown in FIG. 2 does not constitute a limitation on the network device and terminal device. In addition to the components shown in FIG. 2, the network device and terminal device may include more or fewer components than those shown in the figure, or some components may be combined, or different component arrangements may be used.

In embodiments of this application, the chip system may include a chip, or may include a chip and another discrete component.

In addition, actions, terms, and the like in embodiments of this application may be mutually referenced. This is not limited. In embodiments of this application, names of information exchanged between devices, names of parameters in the information, or the like are merely examples. Other names may alternatively be used during specific implementation. This is not limited.

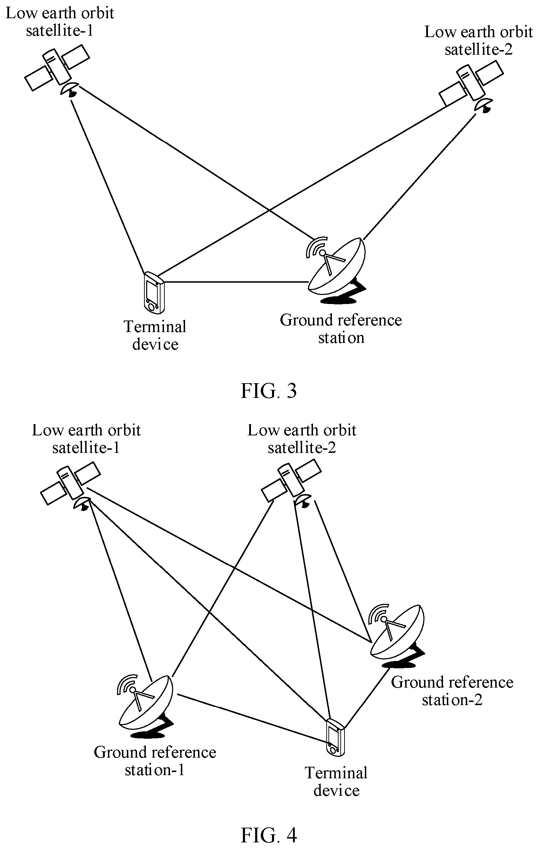

FIG. 3 is a simplified diagram of another communication system according to an embodiment of this application. As shown in FIG. 3, the first network element in FIG. 1 may be a ground reference station, and the communication system may include a low earth orbit satellite-1, a low earth orbit satellite-2, the ground reference station, and a terminal device. The low earth orbit satellite-1, the low earth orbit satellite-2, the ground reference station, and the terminal device are communicatively connected.

The low earth orbit satellite-1 and the low earth orbit satellite-2 may include a communication base station, to send a reference signal to the terminal device, and may perform wireless communication with the terminal device.

The ground reference station may be a base station or a roadside unit (roadside unit, RSU). A form of the roadside unit may be UE whose location is known and fixed. The terminal device may communicate with the RSU through a communication link sidelink. Alternatively, the ground reference station may be an apparatus (gNB) that is deployed in a radio access network, satisfies a 5G standard, and provides a wireless communication function for the terminal device. The gNB may include macro base stations, micro base stations (also referred to as small cells), relay stations, access points, wearable devices, and vehicle-mounted devices in various forms. The gNB may alternatively be a transmission and reception point (Transmission and Reception Point, TRP) or a transmission measurement function (Transmission measurement function, TMF). In addition, the gNB may include a central unit (Central unit, CU) and a distribution unit (Distributed unit, DU) that are integrated into the gNB. The ground reference station may be a ground reference station whose distance from the terminal device is less than a threshold, or may be a ground reference station closest to the terminal device.

The communication link sidelink, a link that is used for communication on a PC5 interface and that is defined in a standard, is also referred to as a sidelink communication link, which is similar to an uplink communication link or a downlink communication link.

The PC5 interface is a direct communication interface, mainly refers to a communication interface between terminals, that is, a short-distance direct communication interface between vehicles, people, and road infrastructure. A characteristic of the PC5 interface is implementing low-latency, high-capacity, and highly-reliable communication through direct connection, broadcast, and network scheduling.

FIG. 4 is a simplified diagram of another communication system according to an embodiment of this application. The communication system includes a low earth orbit satellite-1, a low earth orbit satellite-2, a ground reference station-1, a ground reference station-2, and a terminal device.

For example, only the ground reference station-1 and the ground reference station-2 are shown in FIG. 4, and there may be a plurality of ground reference stations. In addition, only the low earth orbit satellite-1 and the low earth orbit satellite-2 are shown, and correspondingly, there may also be a plurality of low earth orbit satellites. This is not limited in this application. The low earth orbit satellite may send ephemeris information of the low earth orbit satellite to the ground reference station and the terminal device.

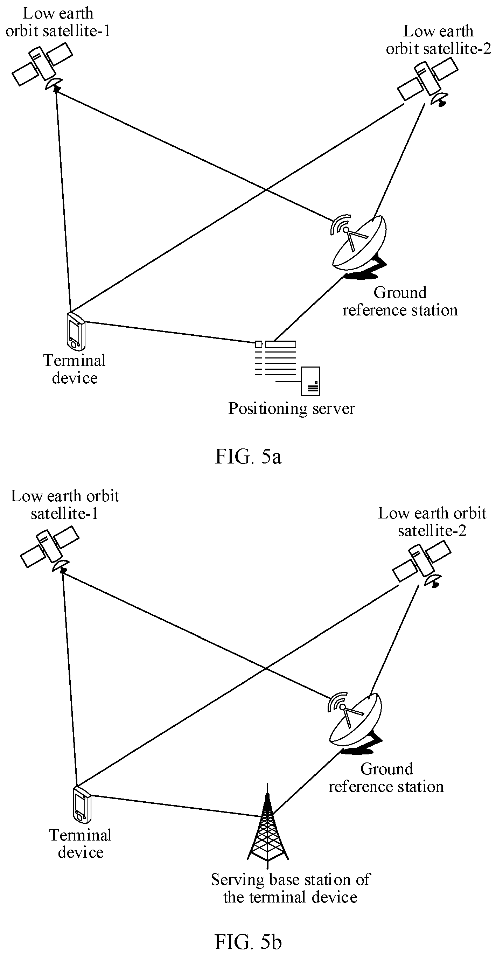

FIG. 5a is a simplified diagram of another communication system according to an embodiment of this application. The communication system includes a low earth orbit satellite-1, a low earth orbit satellite-2, a ground reference station, a terminal device, and a positioning server/serving base station of the terminal device. As shown in FIG. 5a, a first network element may be the positioning server/serving base station of the terminal device. The low earth orbit satellite-1, the low earth orbit satellite-2, the ground reference station, the terminal device, and the positioning server/serving base station of the terminal device are communicatively connected.

The positioning server (Location management function, LMF) may be disposed in the ground reference station or the base station, or may be disposed on the terminal device or the satellite.

FIG. 5a is a simplified diagram of another communication system according to an embodiment of this application. The communication system includes a low earth orbit satellite-1, a low earth orbit satellite-2, a ground reference station, a terminal device, and a positioning server. As shown in FIG. 5a, a first network element may be the positioning server. The low earth orbit satellite-1, the low earth orbit satellite-2, the ground reference station, the terminal device, and the positioning server are communicatively connected.

FIG. 5b is a simplified diagram of another communication system according to an embodiment of this application. The communication system includes a low earth orbit satellite-1, a low earth orbit satellite-2, a ground reference station, a terminal device, and a serving base station of the terminal device. As shown in FIG. 5b, a first network element may be the serving base station of the terminal device. The low earth orbit satellite-1, the low earth orbit satellite-2, the ground reference station, the terminal device, and the serving base station of the terminal device are communicatively connected.

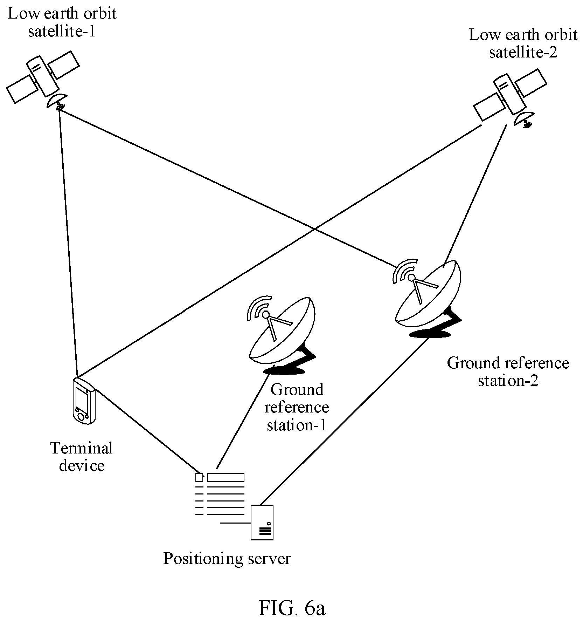

FIG. 6a is a simplified diagram of another communication system according to an embodiment of this application. The communication system includes a low earth orbit satellite-1, a low earth orbit satellite-2, a ground reference station-1, a ground reference station-2, a terminal device, and a positioning server.

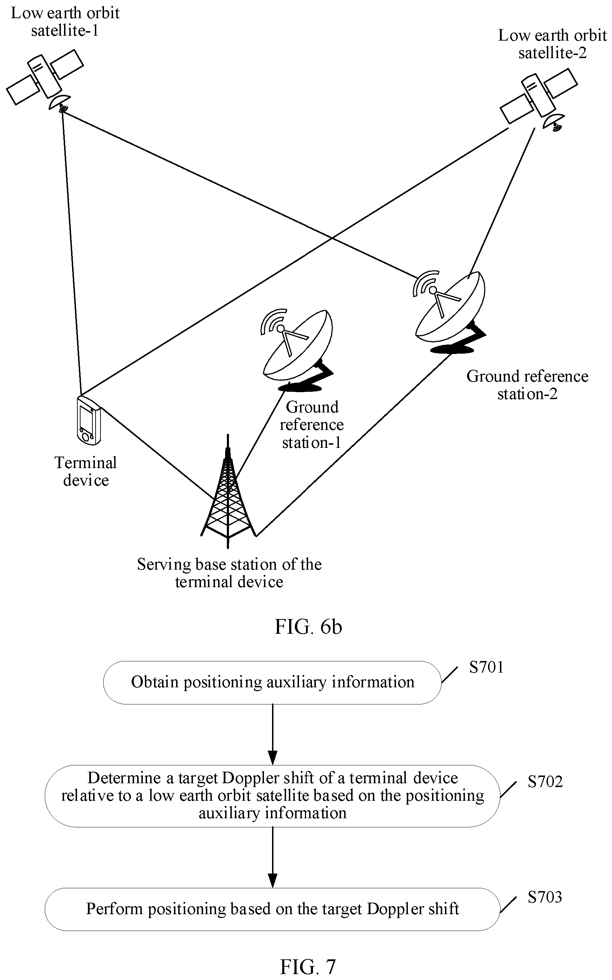

FIG. 6b is a simplified diagram of another communication system according to an embodiment of this application. The communication system includes a low earth orbit satellite-1, a low earth orbit satellite-2, a ground reference station-1, a ground reference station-2, a terminal device, and a serving base station of the terminal device.

The following describes in detail the positioning method provided in embodiments of this application with reference to FIG. 3 to FIG. 6a and FIG. 6b.

It should be understood that names of information between devices, names of parameters in the information, or the like in the following embodiments of this application are merely examples, and there may be other names during specific implementation. This is not specifically limited in embodiments of this application.

FIG. 7 shows a positioning method according to an embodiment of this application. The method is applied to a terminal device, and specifically includes the following steps.

S701: Obtain positioning auxiliary information.

The positioning auxiliary information includes an elevation angle and/or a Doppler shift of a ground reference station relative to a low earth orbit satellite, and ephemeris information of the low earth orbit satellite. The ephemeris information of the low earth orbit satellite includes a speed of the low earth orbit satellite and a height of the low earth orbit satellite relative to the ground. The ground reference station is a ground reference station whose distance from the terminal device is less than a threshold. The threshold may be a predetermined distance value. This is not limited in this application.

In a scenario, the terminal device may need to perform positioning in response to a navigation operation or a positioning operation of a user, and then the terminal device may obtain the positioning auxiliary information. For example, the navigation operation is an operation that the user performs navigation by using an electronic map, and the positioning operation means that a location of the terminal device needs to be positioned in response to enabling of an application.

In another scenario, the first network element needs to monitor location information of the terminal device, and sends a monitoring request to the terminal device, so that the terminal device obtains the positioning assistance. For example, when a large-scale activity is held, the first network element needs to determine a quantity of terminal devices in the area, to allocate corresponding carrier resources.

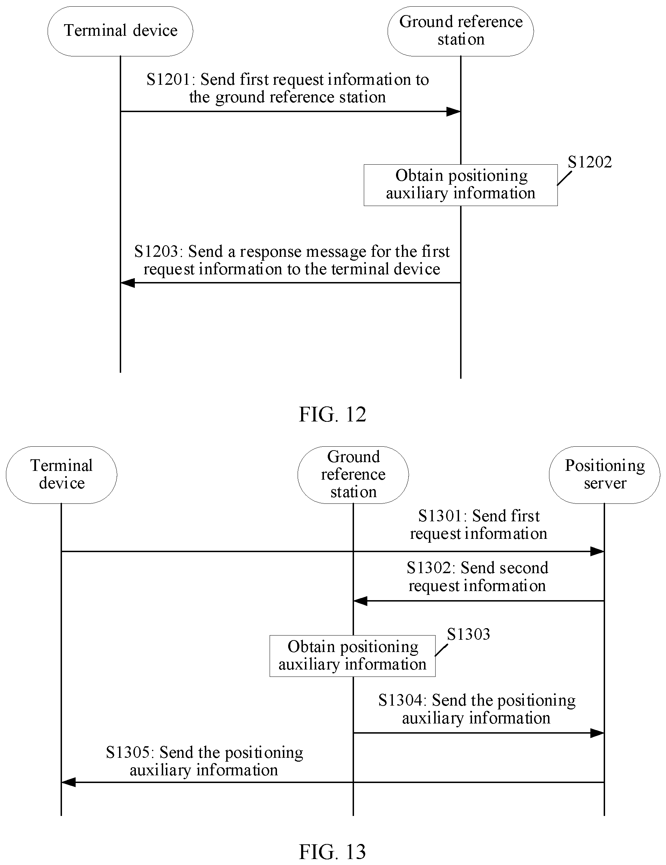

In an example, the terminal device may send first request information to the ground reference station, then the ground reference station feeds back response information for the first request information to the terminal device, and the terminal device may obtain the positioning auxiliary information from the response information. For a specific implementation, refer to the embodiment in FIG. 12, and details are not described herein again.

In another example, the terminal device may send first request information to a positioning server/serving base station, and then the positioning server/serving base station obtains the positioning auxiliary information from the ground reference station, and forwards the positioning auxiliary information to the terminal device. For a specific implementation, refer to the embodiment in FIG. 13, and details are not described herein again.

S702: Determine a target Doppler shift of the terminal device relative to the low earth orbit satellite based on the positioning auxiliary information.

The target Doppler shift may be used for positioning.

In an example, the terminal device may determine a Doppler shift of the terminal device relative to the low earth orbit satellite based on the elevation angle of the ground reference station relative to the low earth orbit satellite, or the terminal device uses the Doppler shift of the ground reference station relative to the low earth orbit satellite as a Doppler shift of the terminal device relative to the low earth orbit satellite.

It may be understood that, because a distance between the terminal device and the ground reference station is small, the terminal device may use an elevation angle of a nearby ground reference station relative to the low earth orbit satellite as the elevation angle of the terminal device relative to the low earth orbit satellite. For example, refer to Table 1.

Table 1

| UE location (x=100 km) | Elevation angle (°) | Doppler shift (kHz) | Doppler shift error (kHz) |
|---|---|---|---|
| No error | 77.982 | 17.588 | 0 |
| 100 m error added | 77.970 | 17.605 | 0.017 |
| 200 m error added | 77.958 | 17.622 | 0.037 |
| 500 m error added | 77.923 | 17.672 | 0.084 |
| 1000 m error added | 77.865 | 17.757 | 0.169 |

It can be learned from the foregoing Table 1 that, for values of elevation angles at different terminal device locations, from a determined terminal device location with no error to the determined terminal device location with an error of 1000 meters, a corresponding elevation error under the two cases is less than 0.1°, and a Doppler shift error is also less than 0.2 kHz. Therefore, the terminal device may use the elevation angle of the nearby ground reference station relative to the low earth orbit satellite to replace the elevation angle of the terminal device relative to the low earth orbit satellite, to estimate the Doppler shift. The elevation angle of the ground reference station relative to the low earth orbit satellite may be calculated based on a location (that is, an ephemeris) of the satellite and a location of the ground reference station.

In an implementation, the terminal device may determine the target Doppler shift based on the ephemeris information and the elevation angle.

In a scenario, a difference between a satellite positioning scenario and a terrestrial cellular positioning scenario is as follows: The low earth orbit satellite moves quickly, while the ground reference station is stationary, the fast-moving low earth orbit satellite causes a large Doppler shift of a radio signal sent by the low earth orbit satellite, and therefore, the terminal device may determine the target Doppler shift based on the speed, the height, and the elevation angle in the ephemeris information.

Calculation of the Doppler shift satisfies the following Formula 1 or Formula 2:

$$f_{d,shift} = \frac{v*\cos(\theta)}{c} \qquad\qquad \text{Formula 1}$$

$$f_{d,shift} = \frac{v}{c} * \frac{R_e}{R_e+h} \cos(E) * f_c \qquad\qquad \text{Formula 2}$$

$f_{d,shift}$ is the Doppler shift, $v$ is the speed of the low earth orbit satellite, $c$ is the speed of light, $f_c$ is a carrier center frequency, $\theta$ is an angle between a moving direction of the low earth orbit satellite and a line connecting the low earth orbit satellite and the terminal device, Re is the radius of the earth, h is the height of the low earth orbit satellite relative to the ground, and E is the elevation angle of the terminal device relative to the low earth orbit satellite, that is, an angle between a horizontal plane and the line connecting the terminal device and the low earth orbit satellite.

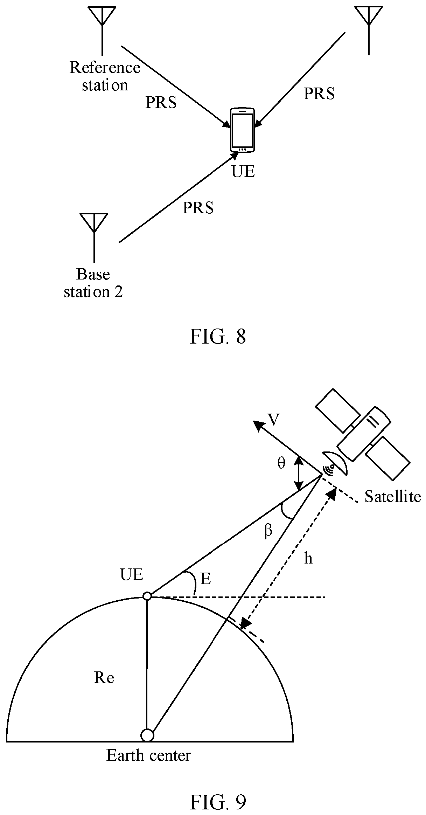

Specifically, FIG. 9 is a diagram of relative positions of a terminal device and a low earth orbit satellite according to an embodiment of this application. In a triangle formed by the terminal device, the earth center, and the low earth orbit satellite, Formula 3 may be obtained according to the sine theorem:

$$\frac{R_e}{\sin(\beta)} = \frac{R_e+h}{\sin(90°+E)} \qquad\qquad \text{Formula 3}$$

Formula 4 may be obtained according to the trigonometric function relationship:

$$\cos(\theta) = \sin\beta \qquad\qquad \text{Formula 4}$$

Formula 2 may be obtained by substituting Formula 3 and Formula 4 into Formula 1.

In a scenario, when the positioning auxiliary information received by the terminal device includes the elevation angle of the ground reference station relative to the low earth orbit satellite, and there is one elevation angle of the ground reference station relative to the low earth orbit satellite, the terminal device may determine, through calculation, the target Doppler shift of the terminal device relative to the low earth orbit satellite based on the ephemeris information and the elevation angle according to Formula 1 or Formula 2.

In another scenario, when the positioning auxiliary information received by the terminal device includes the elevation angle of the ground reference station relative to the low earth orbit satellite, and there are a plurality of ground reference stations, the terminal device may determine, for each ground reference station, a Doppler shift of the terminal device relative to the low earth orbit satellite based on an elevation angle of the ground reference station and the ephemeris information, to obtain a plurality of Doppler shifts, and determine an average value of the plurality of Doppler shifts as the target Doppler shift.

In another scenario, the terminal device uses the Doppler shift as the target Doppler shift.

In another example, when the positioning auxiliary information received by the terminal device includes the Doppler shift of the ground reference station relative to the low earth orbit satellite, and there is one Doppler shift of the ground reference station relative to the low earth orbit satellite, the terminal device may use the Doppler shift of the ground reference station relative to the low earth orbit satellite as the target Doppler shift of the terminal device relative to the low earth orbit satellite.

In another scenario, when the positioning auxiliary information received by the terminal device includes the Doppler shift of the ground reference station relative to the low earth orbit satellite, and there are a plurality of ground reference stations, the terminal device may determine the target Doppler shift based on a plurality of Doppler shifts.

In another example, when the positioning auxiliary information received by the terminal device is the Doppler shift of the ground reference station relative to the low earth orbit satellite, and there are a plurality of Doppler shifts of ground reference stations relative to the low earth orbit satellite, the terminal device may use an average value of the plurality of Doppler shifts as the target Doppler shift.

In another scenario, when the positioning auxiliary information received by the terminal device includes the elevation angle and the Doppler shift of the ground reference station relative to the low earth orbit satellite, and there is one ground reference station, the terminal device may determine the target Doppler shift of the terminal device relative to the low earth orbit satellite based on the ephemeris information and the elevation angle, or the terminal device uses the Doppler shift of the ground reference station relative to the low earth orbit satellite as the target Doppler shift of the terminal device relative to the low earth orbit satellite.

In another scenario, when the positioning auxiliary information received by the terminal device includes the elevation angle and the Doppler shift of the ground reference station relative to the low earth orbit satellite, and there are a plurality of ground reference stations, the terminal device may determine, for each ground reference station, a Doppler shift of the terminal device relative to the low earth orbit satellite based on the ephemeris information and an elevation angle, and use an average value of a plurality of Doppler shifts as the target Doppler shift, or the terminal device uses an average value of a plurality of Doppler shifts of the ground reference stations relative to the low earth orbit satellite as the target Doppler shift of the terminal device relative to the low earth orbit satellite.

Based on the foregoing descriptions, it can be learned that the Doppler shift affects timing estimation accuracy. Specifically, the Doppler shift destroys orthogonality of a reference signal sequence, and consequently, an autocorrelation characteristic of a reference signal no longer maintains a single-peak characteristic. As a result, a receive end cannot accurately determine a correlation peak of a first path when estimating time of arrival, and a misjudgment of the correlation peak causes a deviation of time of arrival estimation, finally affecting positioning accuracy. FIG. 11 is a diagram of positioning accuracy after different Doppler shifts are added. It can be learned that as the Doppler shift increases, a positioning error of the terminal device is increasingly large.

S703. Perform positioning based on the target Doppler shift.

In a possible implementation, the terminal device performs, based on the target Doppler shift determined in S702, frequency shift compensation on a received positioning reference signal (positioning reference signal, PRS) sent by the low earth orbit satellite, performs measurement based on a positioning reference signal obtained through frequency shift compensation, to obtain a time difference of arrival TDOA or an angle of arrival AOA of the low earth orbit satellite, and determines the location information of the terminal device based on a time difference of arrival TDOA technology or an angle of arrival AOA technology.

The positioning reference signal (positioning reference signal, PRS) includes a downlink positioning reference signal (positioning reference signal, PRS) and an uplink positioning reference signal (Sounding Reference Signal, SRS).

For example, the terminal device receives the positioning reference signal sent by the low earth orbit satellite, and the terminal device may perform frequency shift compensation on the positioning reference signal based on the target Doppler shift. The frequency shift compensation may satisfy the following Formula 5:

$$R(n) = r(n) \cdot e^{-j \cdot 2 \cdot \pi \cdot \Delta f \cdot n} \qquad \text{Formula 5}$$

R(*n*) is a compensated positioning reference signal, r(*n*) is the positioning reference signal that is sent by the low earth orbit satellite and that is received by the terminal device, $\Delta f$ is the target Doppler shift, and n is a sequence number of a time-domain sampling point. Certainly, the frequency shift compensation manner herein is merely an example, and a specific compensation algorithm is not limited in the present invention.

After determining the compensated positioning reference information, the terminal device may perform measurement based on the compensated positioning reference signal R(*n*), for example, measure time of arrival or an angle of arrival of the signal. After obtaining time of arrival or angles of arrival of a plurality of satellites through measurement, the terminal device may determine a location of the terminal device based on a DL-TDOA technology.

The following describes a downlink-based positioning technology (DL-TDOA).

For a downlink-based solution, a downlink reference signal needs to be measured on a terminal device side, for example, time of arrival of a downlink positioning reference signal sent by a base station is measured. A measurement process generally includes the following several steps. First, the positioning server/location management function (Location management function, LMF) requests configuration information of the PRS from the serving base station, the serving base station feeds back the configuration information of the PRS to the LMF, and then the LMF sends the configuration information of the PRS to the terminal device.

Then, the LMF may request measurement from the terminal device. After receiving an indication from the LMF, the terminal device starts to receive the PRS sent by the base station, and measures time of arrival of the PRS. Then, the terminal device reports a result obtained through measurement to the positioning server (LMF), and finally the positioning server performs location estimation based on received measurement information.

The following briefly describes how the LMF calculates the location of the terminal device based on a measurement result of the DL-TDOA technology, that is, how to estimate the location of the terminal device by calculating an intersection point of a hyperbola. First, it is assumed that locations of three base stations are known, and coordinates of an ith base station are defined as $(x_i, y_i)$, coordinates of the terminal device are defined as $(x_{UE}, y_{UE})$, and a 1st base station is used as a reference base station. Assuming that time of arrival of the PRS measured by the terminal device at the ith base station is $t_i$, a time difference of arrival between any base station and the reference base station is $\Delta t_{i1}$. According to a definition of the hyperbola (that is, a distance from two fixed points is a constant), a target is located on a hyperbola using the two base stations as focuses, and the following Formula 6 and Formula 7 may be listed:

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \quad \text{Formula 6}$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \quad \text{Formula 7}$$

Location coordinates $(x_{UE}, y_{UE})$ of the terminal device may be determined according to Formula 6 and Formula 7. Actually, due to a measurement error, the foregoing formulas usually do not have closed-form solutions, and a classical optimization algorithm like a least square algorithm or a particle swarm filter algorithm is used to estimate optimal solutions of the foregoing formulas. In embodiments of this application, the trilateral positioning principle in FIG. 8 may be used for satellite positioning, and only the base station in FIG. 8 needs to be replaced with the low earth orbit satellite.

In embodiments of this application, because the elevation angle of the ground reference station relative to the low earth orbit satellite carries timestamp information of a moment at which the elevation angle is calculated, frequency shift compensation is performed on a positioning reference signal at a corresponding moment only based on a target Doppler shift at the moment at which the elevation angle is calculated.

Based on the technical solution in FIG. 7, according to the positioning method provided in this application, because a distance between the ground reference station and the terminal device is less than a threshold, it indicates that the elevation angle and/or the Doppler shift of the ground reference station differ/differs insignificantly from the elevation angle and/or the Doppler shift of the terminal device relative to the low earth orbit satellite. Therefore, the terminal device replaces the elevation angle and/or the Doppler shift of the terminal device relative to the low earth orbit satellite with the elevation angle and/or the Doppler shift of the ground reference station, to facilitate subsequent positioning estimation. Then, the terminal device determines the target Doppler shift of the terminal device relative to the low earth orbit satellite based on the obtained elevation angle and/or Doppler shift of the ground reference station relative to the low earth orbit satellite, and performs positioning based on the target Doppler shift, to avoid impact of the Doppler shift on positioning of the terminal device, and improve positioning accuracy of the terminal device.

In an embodiment, a first network element is a ground reference station. FIG. 12 shows a positioning method according to an embodiment of this application. The method includes S1201 to S1203.

S1201: A terminal device sends first request information to the ground reference station. Correspondingly, the ground reference station receives the first request information sent by the terminal device.

The first request information is used to request positioning auxiliary information, and the positioning auxiliary information includes an elevation angle and/or a Doppler shift of the ground reference station relative to a low earth orbit satellite. The ground reference station may be a ground reference station closest to the terminal device, or may be a plurality of ground reference stations whose distances from the terminal device are less than a threshold. The ground reference station may also be referred to as a reference station or a reference node.

In this embodiment of this application, when the ground reference station is a base station, data or a message between the ground reference station and the terminal device may be carried in RRC signaling. When the ground reference station is a roadside unit (RSU), data or a message between the ground reference station and the terminal device is carried in SLPP signaling or SCI signaling.

In a scenario, the terminal device may need to perform positioning in response to a navigation operation or a positioning operation of a user, and the terminal device may send, to the ground reference station via the SLPP signaling or the SCI signaling, request information for requesting the positioning auxiliary information. For example, the navigation operation is an operation that the user performs navigation by using an electronic map, and the positioning operation means that a location of the terminal device needs to be positioned in response to enabling of an application.

In another scenario, the ground reference station needs to monitor location information of the terminal device, and sends a monitoring request to the terminal device, so that the terminal device sends, to the corresponding ground reference station, request information for requesting the positioning auxiliary information. For example, when a large-scale activity is held, the ground reference station needs to determine a quantity of terminal devices in the area, to allocate corresponding carrier resources.

For example, a communication interface between the terminal device and the base station may be a Uu interface, that is, a cellular network communication interface, including an uplink and a downlink, and a characteristic of the interface is implementing reliable communication in a long distance and a larger range.

S1202: The ground reference station obtains the positioning auxiliary information.

In a possible implementation, the ground reference station may determine the positioning auxiliary information based on ephemeris information. The ephemeris information may be broadcast by the low earth orbit satellite to the ground reference station.

In a scenario, with reference to FIG. 3, when there is one ground reference station, the ground reference station receives location information of the low earth orbit satellite-1, and determines an elevation angle A of the ground reference station relative to the low earth orbit satellite-1 at 10:01 based on the location information of the low earth orbit satellite-1 and location information of the ground reference station. When a program process for continuing to calculate a Doppler shift relative to the low earth orbit satellite-1 is not compiled in the ground reference station, the ground reference station may determine the elevation angle relative to the low earth orbit satellite-1, where the elevation angle carries timestamp information of a moment at which the elevation angle is calculated. When a program process for continuing to calculate a Doppler shift relative to the low earth orbit satellite-1 is compiled in the ground reference station, the ground reference station may substitute ephemeris information of and the elevation angle relative to the low earth orbit satellite-1 into Formula 1 to Formula 4, to determine a Doppler shift A of the ground reference station relative to the low earth orbit satellite-1 at 10:01 through calculation.

Correspondingly, the ground reference station receives location information of the low earth orbit satellite-2, and determines an elevation angle B of the ground reference station relative to the low earth orbit satellite-2 at 10:01 based on the location information of the low earth orbit satellite-2 and the location information of the ground reference station. When a program process for continuing to calculate a Doppler shift relative to the low earth orbit satellite-2 is not compiled in the ground reference station, the ground reference station may determine the elevation angle relative to the low earth orbit satellite-2, where the elevation angle carries timestamp information of a moment at which the elevation angle is calculated. When a program process for continuing to calculate a Doppler shift relative to the low earth orbit satellite-2 is compiled in the ground reference station, the ground reference station may substitute ephemeris information of and the elevation angle relative to the low earth orbit satellite-2 into Formula 1 to Formula 4, to determine a Doppler shift B of the ground reference station relative to the low earth orbit satellite-2 at 10:01 through calculation. Because the elevation angle carries timestamp information of a moment at which the elevation angle is calculated, the Doppler shift may also carry the timestamp information of a moment at which the elevation angle is calculated, to ensure subsequent positioning accuracy.

In another scenario, with reference to FIG. 4, when there are two ground reference stations, the ground reference station-1 may determine an elevation angle A of the ground reference station-1 relative to the low earth orbit satellite-1 at 10:01 based on received location information of the low earth orbit satellite-1 and location information of the ground reference station-1, and simultaneously, the ground reference station-1 may determine an elevation angle B of the ground reference station-1 relative to the low earth orbit satellite-2 at 10:01 based on received location information of the low earth orbit satellite-2 and the location information of the ground reference station-1.

Similarly, when a program process for continuing to calculate a Doppler shift relative to the low earth orbit satellite-1 is not compiled in the ground reference station-1, the ground reference station-1 may determine the elevation angle A relative to the low earth orbit satellite-1 and the elevation angle B relative to the low earth orbit satellite-2, where the elevation angle A and the elevation angle B carry timestamp information of a moment at which the elevation angle is calculated. When a program process for continuing to calculate a Doppler shift relative to the low earth orbit satellite-1 and a Doppler shift relative to the low earth orbit satellite-2 is compiled in the ground reference station-1, the ground reference station-1 may substitute ephemeris information of and the elevation angle relative to the low earth orbit satellite-1 into Formula 1 to Formula 4, to determine a Doppler shift A of the ground reference station-1 relative to the low earth orbit satellite-1 through calculation, and substitute ephemeris information of and the elevation angle relative to the low earth orbit satellite-2 into Formula 1 to Formula 4, to determine a Doppler shift B of the ground reference station-1 relative to the low earth orbit satellite-2 through calculation.

Correspondingly, with reference to FIG. 4, the ground reference station-2 may determine an elevation angle C of the ground reference station-2 relative to the low earth orbit satellite-1 at 10:01 based on the received location information of the low earth orbit satellite-1 and location information of the ground reference station-2, and simultaneously, the ground reference station-2 may determine an elevation angle D of the ground reference station-2 relative to the low earth orbit satellite-2 at 10:01 based on the received location information of the low earth orbit satellite-2 and the location information of the ground reference station-2.

Similarly, when a program process for continuing to calculate a Doppler shift relative to the low earth orbit satellite-1 is not compiled in the ground reference station-2, the ground reference station-2 may determine the elevation angle C relative to the low earth orbit satellite-1 and the elevation angle D relative to the low earth orbit satellite-2, where the elevation angle C and the elevation angle D carry timestamp information of a moment at which the elevation angle is calculated. When a program process for continuing to calculate a Doppler shift relative to the low earth orbit satellite-1 and a Doppler shift relative to the low earth orbit satellite-2 is compiled in the ground reference station-2, the ground reference station-2 may substitute ephemeris information of and the elevation angle relative to the low earth orbit satellite-1 into Formula 1 to Formula 4, to determine a Doppler shift C of the ground reference station-2 relative to the low earth orbit satellite-1 through calculation, and substitute ephemeris information of and the elevation angle relative to the low earth orbit satellite-2 into Formula 1 to Formula 4, to determine a Doppler shift D of the ground reference station-2 relative to the low earth orbit satellite-2 through calculation.

S1203: The ground reference station sends a response message for the first request information to the terminal device. Correspondingly, the terminal device receives the response message that is for the first request information and that is sent by the ground reference station.

It may be understood that the terminal device may obtain the positioning auxiliary information from the response message.

In a possible implementation, when the positioning auxiliary information determined by the ground reference station through calculation is the elevation angle of the ground reference station relative to the low earth orbit satellite, the ground reference station may send the elevation angle to the terminal device via the SLPP signaling or the SCI signaling. Correspondingly, when the positioning auxiliary information determined by the ground reference station through calculation is the Doppler shift of the ground reference station relative to the low earth orbit satellite, the ground reference station may send the Doppler shift to the terminal device via the SLPP signaling or the SCI signaling.

In a scenario, with reference to FIG. 3, the ground reference station sends the elevation angle A relative to the low earth orbit satellite-1 at 10:01 to the terminal device. Correspondingly, if calculating the Doppler shift A relative to the low earth orbit satellite-1 at 10:01, the ground reference station sends the Doppler shift A relative to the low earth orbit satellite-1 at 10:01 to the terminal device.

In another possible implementation, if there are a plurality of ground reference stations, the terminal device receives a plurality of elevation angles or a plurality of Doppler shifts sent by the plurality of ground reference stations.

In another scenario, with reference to FIG. 4, the ground reference station-1 sends the elevation angle A relative to the low earth orbit satellite-1 at 10:01 to the terminal device. Correspondingly, if calculating the Doppler shift A relative to the low earth orbit satellite-1 at 10:01, the ground reference station-1 sends the Doppler shift A relative to the low earth orbit satellite-1 at 10:01 to the terminal device. Correspondingly, the ground reference station-1 sends the elevation angle B relative to the low earth orbit satellite-2 at 10:01 to the terminal device. Correspondingly, if calculating the Doppler shift B relative to the low earth orbit satellite-1 at 10:01, the ground reference station-2 sends the Doppler shift B relative to the low earth orbit satellite-2 at 10:01 to the terminal device.

Further, the ground reference station-2 sends the elevation angle C relative to the low earth orbit satellite-1 at 10:01 to the terminal device. Correspondingly, if calculating the Doppler shift C relative to the low earth orbit satellite-1 at 10:01, the ground reference station-2 sends the Doppler shift C relative to the low earth orbit satellite-2 at 10:01 to the terminal device. Correspondingly, the ground reference station-2 sends the elevation angle D relative to the low earth orbit satellite-2 at 10:01 to the terminal device. Correspondingly, if calculating the Doppler shift D relative to the low earth orbit satellite-1 at 10:01, the ground reference station-2 sends the Doppler shift D relative to the low earth orbit satellite-2 at 10:01 to the terminal device.

Based on the technical solution in FIG. 12, the terminal device directly requests, from the ground reference station (RSU), information about the elevation angle or the frequency shift relative to the low earth orbit satellite, to reduce latency, and includes the request information to the SCI signaling or the SLPP signaling.

In another embodiment, a first network element is a positioning server. FIG. 13 shows a positioning method according to an embodiment of this application. The method includes S1301 to S1305.

S1301: A terminal device sends first request information to the positioning server. Correspondingly, the positioning server receives the first request information sent by the terminal device.

The first request information is used to request positioning auxiliary information, and the positioning auxiliary information includes an elevation angle and/or a Doppler shift of a ground reference station relative to a low earth orbit satellite. The ground reference station may be a ground reference station closest to the terminal device, or may be a plurality of ground reference stations whose distances from the terminal device are less than a threshold.

In a scenario, the terminal device may need to perform positioning in response to a navigation operation or a positioning operation of a user, and send, to the ground reference station, request information for requesting the positioning auxiliary information, where the request information may be carried in LPP signaling. For example, the navigation operation is an operation that the user performs navigation by using an electronic map, and the positioning operation means that a location of the terminal device needs to be positioned in response to enabling of an application.

In another scenario, the positioning server needs to monitor location information of the terminal device, and sends a monitoring request to the terminal device, so that the terminal device sends, to the positioning server, request information for requesting the positioning auxiliary information. For example, when a large-scale activity is held, the ground reference station needs to determine a quantity of terminal devices in the area, to allocate corresponding carrier resources.

In this embodiment of this application, when the ground reference station is a base station, data or a message between the positioning server and the ground reference station may be carried in NRPPa signaling. When the ground reference station is UE, LPP signaling may be used for data or a message between the positioning server/service and the terminal device.

S1302: The positioning server sends second request information to the ground reference station. Correspondingly, the ground reference station receives the second request information sent by the positioning server.

The second request information is used to request the positioning auxiliary information, and there may be one or more ground reference stations.

In an implementation, the second request information sent by the positioning server to the ground reference station may be carried in the NRPPa signaling.

S1303: The ground reference station obtains the positioning auxiliary information.

For a specific implementation, refer to the foregoing S1202. This is not described herein again.

S1304: The ground reference station sends the positioning auxiliary information to the positioning server. Correspondingly, the positioning server receives the positioning auxiliary information sent by the ground reference station.

In a possible implementation, when the positioning auxiliary information determined by the ground reference station through calculation is the elevation angle of the ground reference station relative to the low earth orbit satellite, the ground reference station may send the elevation angle to the positioning server via the NRPPa signaling. Correspondingly, when the positioning auxiliary information determined by the ground reference station through calculation is the Doppler shift of the ground reference station relative to the low earth orbit satellite, the ground reference station may send the Doppler shift to the positioning server via the NRPPa signaling.

In a scenario, with reference to FIG. 5a, the ground reference station sends an elevation angle A relative to the low earth orbit satellite-1 at 10:01 to the positioning server. Correspondingly, if calculating a Doppler shift A relative to the low earth orbit satellite-1 at 10:01, the ground reference station sends the Doppler shift A relative to the low earth orbit satellite-1 at 10:01 to the positioning server.

In another possible implementation, if there are a plurality of ground reference stations, the positioning server receives a plurality of elevation angles or a plurality of Doppler shifts sent by the plurality of ground reference stations.

In another scenario, with reference to FIG. 6a, the ground reference station-1 sends an elevation angle A relative to the low earth orbit satellite-1 at 10:01 to the positioning server. Correspondingly, if calculating a Doppler shift A relative to the low earth orbit satellite-1 at 10:01, the ground reference station-1 sends the Doppler shift A relative to the low earth orbit satellite-1 at 10:01 to the positioning server. Correspondingly, the ground reference station-1 sends an elevation angle B relative to the low earth orbit satellite-2 at 10:01 to the positioning server. Correspondingly, if calculating a Doppler shift B relative to the low earth orbit satellite-1 at 10:01, the ground reference station-2 sends the Doppler shift B relative to the low earth orbit satellite-2 at 10:01 to the positioning server.

Further, the ground reference station-2 sends an elevation angle C relative to the low earth orbit satellite-1 at 10:01 to the positioning server. Correspondingly, if calculating a Doppler shift C relative to the low earth orbit satellite-1 at 10:01, the ground reference station-2 sends the Doppler shift C relative to the low earth orbit satellite-2 at 10:01 to the positioning server. Correspondingly, the ground reference station-2 sends an elevation angle D relative to the low earth orbit satellite-2 at 10:01 to the positioning server. Correspondingly, if calculating a Doppler shift D relative to the low earth orbit satellite-2 at 10:01, the ground reference station-2 sends the Doppler shift D relative to the low earth orbit satellite-2 at 10:01 to the positioning server.

S1305: The positioning server sends the positioning auxiliary information to the terminal device. Correspondingly, the terminal device receives the positioning auxiliary information sent by the positioning server.

For example, the positioning server may forward the positioning auxiliary information of the ground reference station to the terminal device via the LPP signaling.

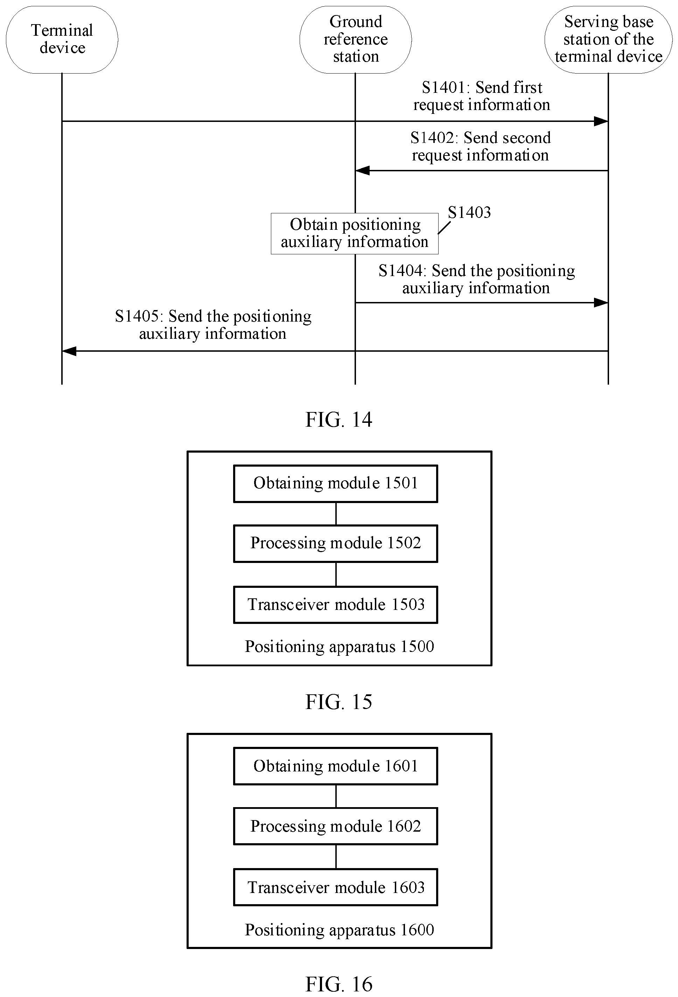

In another embodiment, a first network element is a serving base station of a terminal device. FIG. 14 shows a positioning method according to an embodiment of this application. The method includes S1401 to S1405.

S1401: The terminal device sends first request information to the serving base station of the terminal device. Correspondingly, the serving base station of the terminal device receives the first request information sent by the terminal device.

For a specific implementation, refer to the foregoing S1301. This is not described herein again.

S1402: The serving base station of the terminal device sends second request information to a ground reference station. Correspondingly, the ground reference station receives the second request information sent by the serving base station of the terminal device.

For a specific implementation, refer to the foregoing S1302. This is not described herein again.

S1403: The ground reference station obtains positioning auxiliary information.

For a specific implementation, refer to the foregoing S1303. This is not described herein again.

S1404: The ground reference station sends the positioning auxiliary information to the serving base station of the terminal device. Correspondingly, the serving base station of the terminal device receives the positioning auxiliary information sent by the ground reference station.

In a scenario, with reference to FIG. 5b, the ground reference station sends an elevation angle A relative to the low earth orbit satellite-1 at 10:01 to the serving base station of the terminal device. Correspondingly, if calculating a Doppler shift A relative to the low earth orbit satellite-1 at 10:01, the ground reference station sends the Doppler shift A relative to the low earth orbit satellite-1 at 10:01 to the serving base station of the terminal device.

In another possible implementation, if there are a plurality of ground reference stations, the serving base station of the terminal device receives a plurality of elevation angles or a plurality of Doppler shifts sent by the plurality of ground reference stations.

In another scenario, with reference to FIG. 6b, the ground reference station-1 sends an elevation angle A relative to the low earth orbit satellite-1 at 10:01 to the serving base station of the terminal device. Correspondingly, if calculating a Doppler shift A relative to the low earth orbit satellite-1 at 10:01, the ground reference station-1 sends the Doppler shift A relative to the low earth orbit satellite-1 at 10:01 to the serving base station of the terminal device. Correspondingly, the ground reference station-1 sends an elevation angle B relative to the low earth orbit satellite-2 at 10:01 to the serving base station of the terminal device. Correspondingly, if calculating a Doppler shift B relative to the low earth orbit satellite-2 at 10:01, the ground reference station-1 sends the Doppler shift B relative to the low earth orbit satellite-2 at 10:01 to the serving base station of the terminal device.

Further, the ground reference station-2 sends an elevation angle C relative to the low earth orbit satellite-1 at 10:01 to the serving base station of the terminal device. Correspondingly, if calculating a Doppler shift C relative to the low earth orbit satellite-1 at 10:01, the ground reference station-2 sends the Doppler shift C relative to the low earth orbit satellite-1 at 10:01 to the serving base station of the terminal device. Correspondingly, the ground reference station-2 sends an elevation angle D relative to the low earth orbit satellite-2 at 10:01 to the serving base station of the terminal device. Correspondingly, if calculating a Doppler shift D relative to the low earth orbit satellite-2 at 10:01, the ground reference station-2 sends the Doppler shift D relative to the low earth orbit satellite-2 at 10:01 to the serving base station of the terminal device.

S1405: The serving base station of the terminal device sends the positioning auxiliary information to the terminal device. Correspondingly, the terminal device receives the positioning auxiliary information sent by the serving base station of the terminal device.

For a specific implementation, refer to the foregoing S1305. This is not described herein again.

In conclusion, it can be learned that, in embodiments of this application, an evolution direction of integrated low earth orbit satellite communication and positioning is fully considered, that is, a function of the low earth orbit satellite positioning is added to a function of the low earth orbit satellite communication. In comparison with a conventional satellite positioning method based on a medium or high earth orbit (where satellite communication and satellite positioning are decoupled), a low earth orbit satellite has the following advantages. 1. The low earth orbit satellite may be used for both communication and positioning. When communicating with the low earth orbit satellite, a terminal device does not need to additionally capture and track a medium or high earth orbit satellite, thereby reducing power consumption of the terminal device. 2. In some cases in which no GNSS module or a weak GNSS is disposed in low-cost IOT UE, a low earth orbit satellite-based positioning function of the terminal device may also be implemented. 3. Due to a high flight speed of the low earth orbit satellite, geometric space favorable to positioning of the terminal device can be formed. In addition, the low earth orbit satellite is close to the ground, and therefore has a wider coverage range. 4. The low earth orbit satellite integrates a positioning characteristic into NTN communication to achieve commercial value addition.

It may be understood that, in the foregoing embodiments, the method and/or step implemented by the network device may alternatively be implemented by a component (for example, a chip or a circuit) that is used in the network device, and the method and/or step implemented by the terminal may alternatively be implemented by a component (for example, a chip or a circuit) that is used in the terminal.

The foregoing mainly describes the solutions provided in this application from a perspective of interaction between devices. Correspondingly, this application further provides a communication apparatus, and the communication apparatus is configured to implement the foregoing methods. The communication apparatus may be the network device in the foregoing method embodiments, an apparatus including the foregoing network device, or a component that may be used in the network device. Alternatively, the communication apparatus may be the terminal in the foregoing method embodiments, an apparatus including the foregoing terminal, or a component that may be used in the terminal.

It may be understood that, to implement the foregoing functions, the communication apparatus includes a corresponding hardware structure and/or software module for performing the functions. A person skilled in the art should easily be aware that, in combination with the examples described in embodiments disclosed in this specification, units, algorithms, and steps may be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. In embodiments of this application, module division is an example, and is merely a logical function division. In actual implementation, another division manner may be used.

In an implementation scenario, an example in which the communication apparatus is the terminal in the foregoing method embodiments is used. FIG. 15 is a diagram of a structure of a positioning apparatus. The positioning apparatus 1500 includes an obtaining module 1501, a processing module 1502, and a transceiver module 1503.

In some embodiments, the positioning apparatus may further include a storage module (not shown in FIG. 15), configured to store program instructions and data.

In some embodiments, the transceiver module 1503 may also be referred to as a transceiver module 1503, and is configured to implement a sending function and/or a receiving function. The transceiver module 1503 may include a transceiver circuit, a transceiver machine, a transceiver, or a communication interface.

In some embodiments, the transceiver module 1503 may include a receiving module and a sending module, respectively configured to perform receiving-type steps and sending-type steps performed by the terminal in the foregoing method embodiments, and/or configured to support another process of the technology described in this specification; and the processing module 1502 may be configured to perform processing-type (for example, determining and obtaining) steps performed by the terminal in the foregoing method embodiments, and/or configured to support another process of the technology described in this specification.

An example is as follows.

The obtaining module 1501 is configured to obtain positioning auxiliary information, where the positioning auxiliary information includes an elevation angle and/or a Doppler shift of a ground reference station relative to a low earth orbit satellite, and the ground reference station is a ground reference station whose distance from the terminal device is less than a threshold.

The processing module 1502 is configured to determine a target Doppler shift of the terminal device relative to the low earth orbit satellite based on the positioning auxiliary information.

The processing module 1502 is further configured to perform positioning based on the target Doppler shift.

In a possible implementation, the transceiver module 1503 is configured to: send first request information to a first network element, where the first request information is used to request the positioning auxiliary information; and receive a response message for the first request information, and obtain the positioning auxiliary information from the response message.

In a possible implementation, the first network element includes any one of a positioning server, the ground reference station, and a serving base station of the terminal device.

In a possible implementation, the positioning auxiliary information further includes ephemeris information of the low earth orbit satellite. The processing module 1502 is specifically configured to determine the target Doppler shift based on the ephemeris information and the elevation angle.

In a possible implementation, the ephemeris information of the low earth orbit satellite includes a speed of the low earth orbit satellite and a height of the low earth orbit satellite relative to the ground. The processing module 1502 is further configured to determine the target Doppler shift based on the speed, the height, and the elevation angle.

In a possible implementation, when there are a plurality of ground reference stations, the processing module 1502 is specifically configured to: determine, for each ground reference station, a Doppler shift of the terminal device relative to the low earth orbit satellite based on the elevation angle of the ground reference station and the ephemeris information, to obtain a plurality of Doppler shifts; and determine the target Doppler shift based on the plurality of Doppler shifts.

In a possible implementation, the processing module 1502 is specifically configured to use the Doppler shift as the target Doppler shift.

In a possible implementation, when there are a plurality of ground reference stations, the processing module 1502 is further configured to determine the target Doppler shift based on the plurality of Doppler shifts.

All related content of the steps in the foregoing method embodiments may be cited in function descriptions of the corresponding functional modules. Details are not described herein again.

In this application, the positioning apparatus is presented in a form of dividing functional modules in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in terms of hardware implementation, a person skilled in the art may figure out that the positioning apparatus may be in a form of the communication apparatus shown in FIG. 2.

In an example, a function/an implementation process of the processing module 1502 in FIG. 15 may be implemented by using the processor 201 in the communication apparatus shown in FIG. 2 by invoking the computer-executable instructions stored in the memory 202, and a function/an implementation process of the transceiver module 1503 in FIG. 15 may be implemented by using the communication interface 204 in the communication apparatus shown in FIG. 2.

In some embodiments, when the positioning apparatus in FIG. 15 is a chip or a chip system, a function/implementation process of the processing module may be implemented by using an input/output interface (or a communication interface) of the chip or the chip system, and a function/implementation process of the transceiver module may be implemented by using a processor (or a processing circuit) of the chip or the chip system.

The positioning apparatus provided in this embodiment can perform the foregoing method. Therefore, for technical effects that can be achieved by the positioning apparatus, refer to the foregoing method embodiments. Details are not described herein again.

In an implementation scenario, an example in which the communication apparatus is the network device in the foregoing method embodiments is used. FIG. 16 is a diagram of a structure of another positioning apparatus 1600, used in a first network element.

The positioning apparatus includes an obtaining module 1601, a processing module 1602, and a transceiver module 1603.

In some embodiments, the positioning apparatus may further include a storage module (not shown in FIG. 16), configured to store program instructions and data.

In some embodiments, the transceiver module 1603 may also be referred to as a transceiver unit, and is configured to implement a sending function and/or a receiving function. The transceiver module 1603 may include a transceiver circuit, a transceiver machine, a transceiver, or a communication interface.

In some embodiments, the transceiver module 1603 may include a receiving module and a sending module, respectively configured to perform receiving-type steps and sending-type steps performed by the network device in the foregoing method embodiments, and/or configured to support another process of the technology described in this specification; and the processing module 1602 may be configured to perform processing-type (for example, determining and obtaining) steps performed by the network device in the foregoing method embodiments, and/or configured to support another process of the technology described in this specification.

An example is as follows.

The transceiver module 1603 is configured to receive first request information from a terminal device, where the first request information is used to request positioning auxiliary information, the positioning auxiliary information includes an elevation angle and/or a Doppler shift of a ground reference station relative to a low earth orbit satellite, and the ground reference station is a ground reference station whose distance from the terminal device is less than a threshold.

The obtaining module 1601 obtains the positioning auxiliary information, and sends the positioning auxiliary information to the terminal device.

In a possible implementation, the first network element includes any one of a positioning server, the ground reference station, and a serving base station of the terminal device.

In a possible implementation, the first network element includes the positioning server or the serving base station of the terminal device. The transceiver module 1603 is further configured to: send second request information to the ground reference station, where the second request information is used to request the positioning auxiliary information; and receive the positioning auxiliary information sent by the ground reference station.

In a possible implementation, the first network element includes the ground reference station. The obtaining module 1601 is further configured to obtain ephemeris information of the low earth orbit satellite.

In a possible implementation, the processing module 1602 is further configured to determine the positioning auxiliary information based on the ephemeris information.

For detailed descriptions of the foregoing optional implementations, refer to the foregoing method embodiments. Details are not described herein again. In addition, for any explanation of the positioning apparatus provided above and descriptions of beneficial effects, refer to the foregoing corresponding method embodiments. Details are not described again.

For example, with reference to FIG. 2, some or all functions implemented by the obtaining module 1601, the transceiver module 1603, and the processing module 1602 in the positioning apparatus may be implemented by the processor 201 in FIG. 2 by executing the program code in the memory 202 in FIG. 2.

An embodiment of this application further provides a computer-readable storage medium. The computer-readable storage medium stores a computer program. When the computer program is run on a computer, the computer is caused to perform any method performed by the positioning apparatus provided above.

For any explanation of content related to the computer-readable storage medium provided above and descriptions of beneficial effects, refer to the foregoing corresponding embodiments. Details are not described herein again.

An embodiment of this application further provides a chip. A control circuit for implementing functions of the positioning apparatus, and one or more ports are integrated into the chip. Optionally, for functions supported by the chip, refer to the foregoing descriptions. Details are not described herein again. A person of ordinary skill in the art may understand that all or some of the steps of the foregoing embodiments may be implemented by a program instructing related hardware. The program may be stored in a computer-readable storage medium. The storage medium mentioned above may be a read-only memory, a random access memory, or the like. The processing unit or the processor may be a central processing unit, a general-purpose processor, an application-specific integrated circuit (application-specific integrated circuit, ASIC), a microprocessor (digital signal processor, DSP), a field programmable gate array (field programmable gate array, FPGA), another programmable logic device, a transistor logic device, a hardware component, or any combination thereof.

An embodiment of this application further provides a computer program product that includes instructions. When the instructions are run on a computer, the computer is caused to perform any method in the foregoing embodiments. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, an SSD), or the like.

It should be noted that all the foregoing components provided in embodiments of this application and configured to store computer instructions or computer programs, for example, but not limited to, the memory, the computer-readable storage medium, and the communication chip, are non-transitory (non-transitory).

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the spirit and scope of this application. In this way, provided that these modifications and variations made to this application fall within the scope of the claims of this application and equivalent techniques thereof, this application is also intended to cover such modifications and variations.

**Claims**

1. A positioning method, applied to a terminal device and comprising:

   obtaining positioning auxiliary information, wherein the positioning auxiliary information comprises an elevation angle and/or a Doppler shift of a ground reference station relative to a low earth orbit satellite, and the ground reference station is a ground reference station whose distance from the terminal device is less than a threshold;
   determining a target Doppler shift of the terminal device relative to the low earth orbit satellite based on the positioning auxiliary information; and
   performing positioning based on the target Doppler shift.

2. The method according to claim 1, wherein the obtaining the positioning auxiliary information comprises:

   sending first request information to a first network element, wherein the first request information is used to request the positioning auxiliary information; and
   receiving a response message for the first request information, and obtaining the positioning auxiliary information from the response message.

3. The method according to claim 2, wherein the first network element comprises any one of a positioning server, the ground reference station, and a serving base station of the terminal device.

4. The method according to any one of claims 1 to 3, wherein the positioning auxiliary information further comprises ephemeris information of the low earth orbit satellite; and
   the determining the target Doppler shift of the terminal device relative to the low earth orbit satellite based on the positioning auxiliary information comprises:
   determining the target Doppler shift based on the ephemeris information and the elevation angle.

5. The method according to claim 4, wherein the ephemeris information of the low earth orbit satellite comprises a speed of the low earth orbit satellite and a height of the low earth orbit satellite relative to the ground; and
   the determining the target Doppler shift based on the ephemeris information and the elevation angle comprises:
   determining the target Doppler shift based on the speed, the height, and the elevation angle.

6. The method according to claim 5, wherein the target Doppler shift satisfies the following formula:

$$f_{d,shift} = \frac{v}{c} * \frac{R_e}{R_e + h} \cos(E) * f_c$$

$f_{d,shift}$ is the target Doppler shift, $v$ is the speed of the low earth orbit satellite, $c$ is the speed of light, $R_e$ is the radius of the earth, $h$ is the height of the low earth orbit satellite relative to the ground, $E$ is the elevation angle, and $f_c$ is a carrier center frequency.

7. The method according to claim 4, wherein there are a plurality of ground reference stations; and determining the target Doppler shift of the terminal device relative to the low earth orbit satellite based on the positioning auxiliary information comprises:

    determining, for each ground reference station, a Doppler shift of the terminal device relative to the low earth orbit satellite based on the elevation angle of the ground reference station and the ephemeris information, to obtain a plurality of Doppler shifts; and
    determining the target Doppler shift based on the plurality of Doppler shifts.

8. The method according to any one of claims 1 to 3, wherein the determining the target Doppler shift of the terminal device relative to the low earth orbit satellite based on the positioning auxiliary information comprises:
using the Doppler shift as the target Doppler shift.

9. The method according to claim 8, wherein there are a plurality of ground reference stations; and determining the target Doppler shift of the terminal device relative to the low earth orbit satellite based on the positioning auxiliary information comprises:
determining the target Doppler shift based on a plurality of Doppler shifts.

10. A positioning method, applied to a first network element and comprising:

    receiving first request information from a terminal device, wherein the first request information is used to request positioning auxiliary information, the positioning auxiliary information comprises an elevation angle and/or a Doppler shift of a ground reference station relative to a low earth orbit satellite, and the ground reference station is a ground reference station whose distance from the terminal device is less than a threshold; and
    obtaining the positioning auxiliary information, and sending the positioning auxiliary information to the terminal device.

11. The method according to claim 10, wherein the first network element comprises any one of a positioning server, the ground reference station, and a serving base station of the terminal device.

12. The method according to claim 10 or 11, wherein the first network element comprises the positioning server or the serving base station of the terminal device; and
the obtaining the positioning auxiliary information comprises:

    sending second request information to the ground reference station, wherein the second request information is used to request the positioning auxiliary information; and
    receiving the positioning auxiliary information sent by the ground reference station.

13. The method according to claim 10 or 11, wherein the first network element comprises the ground reference station, and the method further comprises:

    obtaining ephemeris information of the low earth orbit satellite; and
    the obtaining the positioning auxiliary information comprises:
    determining the positioning auxiliary information based on the ephemeris information.

14. A positioning apparatus, used in a terminal device, wherein the apparatus comprises an obtaining unit and a processing unit, wherein

    the obtaining unit is configured to obtain positioning auxiliary information, wherein the positioning auxiliary information comprises an elevation angle and/or a Doppler shift of a ground reference station relative to a low earth orbit satellite, and the ground reference station is a ground reference station whose distance from the terminal device is less than a threshold;
    the processing unit is configured to determine a target Doppler shift of the terminal device relative to the low earth orbit satellite based on the positioning auxiliary information; and
    the processing unit is further configured to perform positioning based on the target Doppler shift.

15. A positioning apparatus, used in a first network element, wherein the apparatus comprises a transceiver unit and an obtaining unit, wherein

the transceiver unit is configured to receive first request information from a terminal device, wherein the first request information is used to request positioning auxiliary information, the positioning auxiliary information comprises an elevation angle and/or a Doppler shift of a ground reference station relative to a low earth orbit satellite, and the ground reference station is a ground reference station whose distance from the terminal device is less than a threshold;

the obtaining unit is configured to obtain the positioning auxiliary information; and

the transceiver unit is further configured to send the positioning auxiliary information to the terminal device.

16. A communication apparatus, wherein the communication apparatus comprises a processor and a communication interface, wherein

the communication interface is configured to communicate with a module outside the communication apparatus; and

the processor is configured to execute computer-executable instructions to cause the communication apparatus to perform the method according to any one of claims 1 to 9, or to cause the communication apparatus to perform the method according to any one of claims 10 to 13.

17. A computer-readable storage medium, comprising instructions, wherein when the instructions are run on a communication apparatus, the communication apparatus is caused to perform the method according to any one of claims 1 to 9, or the communication apparatus is caused to perform the method according to any one of claims 10 to 13.

18. A communication system, comprising the terminal device, the first network element, and the low earth orbit satellite according to any one of claims 1 to 9 or claims 10 to 13.

Low earth
orbit satellite

First network
element

Terminal device

FIG. 1

200

201

207

Processor

CPU 0

CPU 1

Processor

CPU 0

CPU 1

202

Communication
line 203

Memory

204

205

206

Communication
interface

Output
device

Input device

FIG. 2

Low earth orbit
satellite-1

Low earth orbit
satellite-2

Terminal
device

Ground reference
station

FIG. 3

Low earth orbit
satellite-1

Low earth orbit
satellite-2

Ground reference
station-2

Ground reference
station-1

Terminal
device

FIG. 4

Low earth
orbit satellite-1

Low earth
orbit satellite-2

Ground
reference station

Terminal
device

Positioning server

FIG. 5a

Low earth orbit
satellite-1

Low earth orbit
satellite-2

Ground
reference station

Terminal
device

Serving base station of
the terminal device

FIG. 5b

Low earth orbit
satellite-1

Low earth orbit
satellite-2

Ground reference
station-2

Ground
reference
station-1

Terminal
device

Positioning server

FIG. 6a

Low earth orbit
satellite-1

Low earth orbit
satellite-2

Ground reference
station-2

Ground
reference
station-1

Terminal
device

Serving base station of the
terminal device

FIG. 6b

Obtain positioning auxiliary information — S701

Determine a target Doppler shift of a terminal device
relative to a low earth orbit satellite based on the positioning
auxiliary information — S702

Perform positioning based on the target Doppler shift — S703

FIG. 7

FIG. 8

FIG. 9

FIG. 10

FIG. 11

Terminal device

Ground reference station

S1201: Send first request information to the ground reference station

Obtain positioning auxiliary information — S1202

S1203: Send a response message for the first request information to the terminal device

FIG. 12

Terminal device

Ground reference station

Positioning server

S1301: Send first request information

S1302: Send second request information

Obtain positioning auxiliary information — S1303

S1304: Send the positioning auxiliary information

S1305: Send the positioning auxiliary information

FIG. 13

Terminal device

Ground reference station

Serving base station of the terminal device

S1401: Send first request information

S1402: Send second request information

Obtain positioning auxiliary information

S1403

S1404: Send the positioning auxiliary information

S1405: Send the positioning auxiliary information

**FIG. 14**

Obtaining module 1501

Processing module 1502

Transceiver module 1503

Positioning apparatus 1500

**FIG. 15**

Obtaining module 1601

Processing module 1602

Transceiver module 1603

Positioning apparatus 1600

**FIG. 16**

## INTERNATIONAL SEARCH REPORT

| | |
|---|---|
| International application No. | |
| | **PCT/CN2024/123651** |

### A. CLASSIFICATION OF SUBJECT MATTER

G01S5/02(2010.01)i; H04W64/00(2009.01)i

According to International Patent Classification (IPC) or to both national classification and IPC

### B. FIELDS SEARCHED

Minimum documentation searched (classification system followed by classification symbols)

G01S5/-; H04W64/-; G01S19/-

Documentation searched other than minimum documentation to the extent that such documents are included in the fields searched

Electronic data base consulted during the international search (name of data base and, where practicable, search terms used)

CNTXT, ENTXT, ENTXTC, VEN, WPABSC, CNKI, IEEE, 百度学术, BAIDU SCHOLAR: 华为技术有限公司; 高鑫, 刘梦婷: 补偿, 参考站, 低轨, 定位, 参考信号, 多普勒, 基准站, 位置, 卫星, 校正, 校准, 修正, 仰角, 坐标; AOA, AOD, doppler, LEO, NTN, offset, PRS, satellite, shift, SRS, TDOA, TOA, frequency , locat+, correct+, calibrat+, reference signal, LOW earth orbit, position+, non-terrestrial network, compensat+, localizat+

### C. DOCUMENTS CONSIDERED TO BE RELEVANT

| Category* | Citation of document, with indication, where appropriate, of the relevant passages | Relevant to claim No. |
|---|---|---|
| Y | US 2023199685 A1 (LENOVO UNITED STATES INC.) 22 June 2023 (2023-06-22) description, paragraphs 41, 76, and 97, and figure 1 | 1-18 |
| Y | CN 1484038 A (ERIDE INC. et al.) 24 March 2004 (2004-03-24) description, pages 3-5, and figure 1 | 1-18 |
| A | CN 114244418 A (HUAWEI TECHNOLOGIES CO., LTD.) 25 March 2022 (2022-03-25) entire document | 1-18 |
| A | CN 116774264 A (XIDIAN UNIVERSITY) 19 September 2023 (2023-09-19) entire document | 1-18 |
| A | CN 112051543 A (THE 10TH RESEARCH INSTITUTE OF CHINA ELECTRONICS TECHNOLOGY GROUP CORPORATION) 08 December 2020 (2020-12-08) entire document | 1-18 |
| A | CN 116886151 A (HUAWEI TECHNOLOGIES CO., LTD.) 13 October 2023 (2023-10-13) entire document | 1-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2024** | **14 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/123651** |

| Patent document cited in search report | | | Publication date (day/month/year) | Patent family member(s) | | | Publication date (day/month/year) |
| --- | --- | --- | --- | --- | --- | --- | --- |
| US | 2023199685 | A1 | 22 June 2023 | EP | 4449638 | A1 | 23 October 2024 |
|  |  |  |  | WO | 2023111965 | A1 | 22 June 2023 |
|  |  |  |  | GB | 202409922 | D0 | 21 August 2024 |
|  |  |  |  | GB | 2629113 | A | 16 October 2024 |
| CN | 1484038 | A | 24 March 2004 | JP | 2004069704 | A | 04 March 2004 |
|  |  |  |  | US | 2004192334 | A1 | 30 September 2004 |
|  |  |  |  | US | 7200414 | B2 | 03 April 2007 |
|  |  |  |  | EP | 1396731 | A1 | 10 March 2004 |
| CN | 114244418 | A | 25 March 2022 | CN | 114244418 | B | 06 June 2023 |
| CN | 116774264 | A | 19 September 2023 | CN | 116774264 | B | 23 January 2024 |
| CN | 112051543 | A | 08 December 2020 | CN | 112051543 | B | 08 August 2023 |
| CN | 116886151 | A | 13 October 2023 |  | None |  |  |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311351203